**Europäisches Patentamt**

**European Patent Office**

**Office européen des brevets**

(19)

(11) Veröffentlichungsnummer: **0 092 703**
**B1**

(12)

# EUROPÄISCHE PATENTSCHRIFT

(45) Veröffentlichungstag der Patentschrift:
26.11.86

(51) Int. Cl.⁴: **B 60 H 1/22,** G 05 D 23/19,
**B 60 S** 1/58

(21) Anmeldenummer: **83103342.8**

(22) Anmeldetag: **06.04.83**

(54) Schaltanordnung für eine elektrische Zusatzheizung in Kraftfahrzeugen.

(30) Priorität: **28.04.82 DE 3215802**

(43) Veröffentlichungstag der Anmeldung:
**02.11.83 Patentblatt 83/44**

(45) Bekanntmachung des Hinweises auf die Patenterteilung:
**26.11.86 Patentblatt 86/48**

(84) Benannte Vertragsstaaten:
**DE FR GB IT SE**

(56) Entgegenhaltungen:
**EP-A-0 013 298**
**DE-A-2 751 563**
**DE-A-2 944 211**
**DE-C-668 916**
**FR-A-2 359 717**
**FR-A-2 371 322**
**FR-A-2 421 589**
**FR-A-2 442 152**

(73) Patentinhaber: **BAYERISCHE MOTOREN WERKE
Aktiengesellschaft, Postfach 40 02 40 Petuelring
130, D-8000 München 40 (DE)**

(72) Erfinder: **Grohmann, Kurt, Toni- Pfülf- Strasse 72,
D-8000 München 50 (DE)**

(74) Vertreter: **Bullwein, Fritz, Bayerische Motoren
Werke Aktiengesellschaft Postfach 40 02 40
Petuelring 130 AJ- 33, D-8000 München 40 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Schaltanordnung für eine elektrische Zusatzheizung in Kraftfahrzeugen, insbesondere für deren Heckscheiben, mit einer Heizvorrichtung für den Fahrzeuginnenraum, und mit einer gemeinsamen Steuereinrichtung für die Zusatzheizung und die Heizvorrichtung.

Eine derartige Schaltanordnung ist aus der FR-A- 2 442 152 bekannt. Dabei wird eine mit zwei Heizstufen versehene Heckscheibenheizung entsprechend zweier Einstellungen der Heiz- bzw. Klimaanlage eingeschaltet. Gegenüber herkömmlichen, unabhängig von der Heizvorrichtung manuell schaltbaren Zusatzheizung ergibt sich dadurch eine Erhöhung des Bildungskomforts.

Der Erfindung liegt die Aufgabe zugrunde, eine Schaltanordnung der eingangs genannten Art zu schaffen, bei der Heizleistung möglichst optimal an die Erfordernisse hinsichtlich Bedienungskomfort, Energie- und Kraftstoffverbrauch angepaßt ist. Die Erfindung löst diese Aufgabe dadurch, daß die Zusatzheizung wie der Heizmittelstrom der Heizvorrichtung getaktet ist und daß die Einschaltzeit der Zusatzheizung gegenüber der des Heizmittelstroms entsprechend weiterer Einflußgrößen grändert ist.

Die Erfindung beruht auf den Grundgedanken, daß der Umfang der Heizung des Fahrzeuginnenraums und der erforderlichen Intensität der Zusatzheizung unter den üblichen Betriebsbedingungen des Kraftfahrzeugs in einem guten Zusammenhang stehen und zur Anpassung an die individuellen Betriebsbedingungen die Synchronität zwischen den beiden Heizeinrichtungen zu modifizieren ist. Auf diese Weise entfallen gesonderte Schaltmittel für die Zusatzheizung völlig. Im Idealfall läßt sich der üblicherweise vorhandene mechanische Schalter für die Zusatzheizung bzw. eine gesonderte Steuereinrichtung hierfür einsparen. Eine weiter verbesserte Anpassung des Zusatzheizungsbe triebs läßt sich dadurch erreichen, daß die Einschaltzeit der Zusatzheizung gegenüber der des Heimittelstroms geändert ist. Neben der Einschaltung der Zusatzheizung jeweils für eine konstante Zeitspanne innerhalb eines oder mehrerer Schaltzyklen des Heizmittelstroms kann die Einschaltzeit der Zusatzheizung auch entsprechend weiterer Einflußgrößen verändert werden. Bei diesen Einflußgrößen kann es sich um die Temperatur und/oder die Feuchtigkeit auf dem die Zusatzheizung tragenden Körper handeln.

Die getaktete Einschaltung einer Scheibenheizung ist an sich aus der DE-C- 668 916 bekannt. Es ist weiter bekannt (DE-A- 27 51 563), die Heckscheibenheizung durch eine Schalteinheit für eine Wisch- und Waschanlage der Heckscheibe zu steuern. Eine irgendwie geartete Anpassung der Heckscheibenheizung an die tatsächlichen Bedürfnisse läßt sich dabei jedoch nicht erzielen. Ferner geht aus der DE-A- 2654 357 Die Einschaltung der Heckscheibenheizung durch den Schalter für das Heizgebläse hervor.

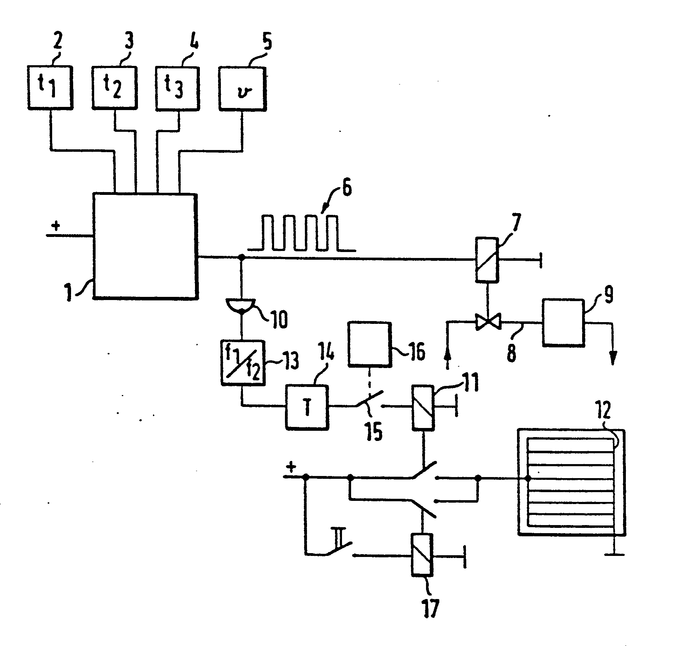

In der Zeichnung ist ein Ausführungsbeispiel der Erfindung dargerstellt und im folgenden näher erlautert.

Die leichnung zeigt eine bekannte Heizvorrichtung für den Innenraum eines Kraftfahrzeugs. Sie enthält als wesentliches Element eine elektronische Steuereinrichtung 1, die verschiedene Informationen über innere und äußere Bedingungen des Fahrzeugs erhält. Hierzu dienen beispielsweise Temperaturfühler 2 bis 4 für die Innenraum- und Außentemperatur des Kraftfahrzeugs sowie die Temperatur des Motor-Kühlwassers. Ferner liegt ein Signal für die Geschwindigkeit des Kraftfahrzeugs an, das von einem entsprechenden Geber 5 stammt.

Die Steuereinrichtung 1 liefert eine Impulsfolge 6 mit entsprechend den jeweiligen Bedingungen in ihrer Länge variierten Impulsen für ein Magnetventil 7, das im Heizmittelstrom 8 zu einem Wärmetauscher 9 der Heizvorrichtung für den Fahrzeuginnenraum liegt. Der Heizmittelstrom 8 ist vom Motor-Kühlwasserkreislauf abgezweigt.

Die das Magnetventil 7 getaktet schaltende Impulsfolge 6 ist ferner über einen Inverter 10 einem Relais 11 für eine elektrische Zusatzheizung in Form einer Heckscheibenheizung 12 zugeführt. Zwischen dem Inverter 10 und dem Relais 11 können andeutungsweise dargestellte Anpassungsglieder vorgesehen sein, um die Ein- bzw. Ausschaltung der Heckscheibenheizung 12 gegenüber der durch das Magnetventil 7 bewirkten entsprechenden Schaltung des Heizmittelstroms 8 zu modifizieren. Bei diesen Anpassungsgliedern kann es sich um einen Frequenzuntersetzer 13, einen Zeitschalter 14 sowie einen gesteuerten Schalter 15 handeln. Der frequenzuntersetzer 13 läßt beispielsweise nur jeden zweiten oder dritten oder... Schaltimpuls der Impulsfolge 6 durch. Der Zeitschalter 14 bewirkt selbsttätig die Unterbrechung der Impulsfolge 6 und damit der Heckscheibenheizung 12 nach einer vorgegebenen Gesamtbetriebsdauer und ermöglicht gegebenenfalls die Wiedereinschaltung der Heckscheibenheizung entsprechend der des Wärmetauschers 9 nach einer bestimmten Ruhepause. Der gesteuerte Schalter 15 schließlich ermöglicht, weitere Einflußgrößen für die Heckscheibenheizung zu berücksichtigen. Hierzu ist der Schalter 15 durch eine weitere Steuereinrichtung 16 betätigt, die durch die flanken der Schaltimpulse der Impulsfolge 6 getriggert wird und Schaltimpulse liefert, deren Länge konstant oder entsprechend den für die Fahrzeuginnenraum-Heizvorrichtung maßgeblichen Bedingungen variiert ist.

Stets erfolgt jedoch die Einschaltung der Heckscheibenheizung entsprechend der

Heizvorrichtung für den Fahrzeuginhenraum. Sofern keinerlei Anpassungsglieder wie die dargestellten Teile 13 bis 15 vorhanden sind, ist die Heizvorrichtung für den Fahrzeuginnenraum und die Heckscheibenheizung 12 synchron ein- und ausgeschaltet. Diese Synchronisierung ermöglicht es, die Weckscheibenheizung 12 ohne gesonderte Steuervorrichtungen im erforderlichen Maße und unter weitgehender Vermeidung einer übermäßigen Belastung der Energiebilanz des Kraftfahrzeugs automatisch zu schalten. Durch Anpassungsglieder, wie als Teile 13 bis 15 dargestellt, wird diese Synchronisierung modifiziert und mit geringem schaltungsteshnischen Aufwand die Anpassung der Heckscheibenheizung 12 an die des fahrzeuginnenraums optimiert.

Selbstverständlich ist es auch möglich, sie Heckscheibenheizung 12 beispielsweise unter extremen Witterungsbedingungen gesondert einzuschalten, hierzu dient beispielsweise ein manuell schaltbsres Zeitschaltrelais 17, das parallel zum Relais 11 angeordnet ist.

## Patentansprüche

1. Schaltanordnung für eine elektrische Zusatzheizung (12) in Kraftfahrzeugen, insbesondere für deren Heckscheiben, mit einer Heizvorrichtung für den Fahrzeuginnenraum, und mit einer gemeinsamen Steuereinrichtung (1) für die Zusatzheizung, dadurch gekennzeichnet, daß die Zusatzheizung (12) wie der Heizmittelstrom (8) der Heizvorrichtung getaktet geschaltet ist und daß die Einschaltzeit der Zusatzheizung gegenüber der des Heizmittelstroms entsprechend weiterer Einflußgrößen geändert ist.

2. Schaltanordnung nach Anspruch 1, gekennzeichnet durch die Berücksichtigung von Temperatur und/oder Feuchtigkeit auf dem die Zusatzhelzung (12) tragenden Körper.

3. Schaltanordnung nach Anspruch 1 oder 2, dadurch gekennzeichnet, daß die Zusatzheizung (12) nach mehreren Schaltzyklen des Heizmittelstroms (8) wieder eingeschaltet ist.

4. Schaltanordnung nach einem der Ansprüche 1 bis 3, dadurch gekennzeichnet, daß die Einschaltfrequenz der Zusatzheizung (12) gegenüber der des Heizmittelstroms (8) untersetzt ist.

## Claims

1. A switching arrangement for an electric additional-heating system (12) in motor vehicles, especially for their rear windows, comprising heating means for the vehicle interior and common control apparatus (1) for the additional heating system, characterised in that the additional heating system (12) is switched in a cadenced manner like the heating medium flow (8) of the heating device and that the "switch-on" time of the additional heating system is varied in comparison with that of the heating medium flow in accordance with further influencing factors.

2. A switching arrangement according to Claim 1, characterised by the sensing of the temperature and/or humidity on the body carrying the additional heating system (12).

3. A switching arrangement according to Claim 1 or 2, characterised in that the additional heating system (12) is switched on again after several switching cycles of the heating medium flow (8).

4. A switching arrangement according to any one of Claims 1 to 3, characterised in that the switch-on frequency of the additional heating system (12) is stepped down in comparison with that of the heating medium flow (8).

## Revendications

1.- Dispositif de branchement pour un chauffage électrique supplémentaire (12) dans des véhicules automobiles, notamment pour les glaces arrière de ces véhicules, avec un dispositif de chauffage pour l'espace interne du véhicule, et avec un dispositif de commande commun (1) pour le chauffage supplémentaire et pour le dispositif de chauffage, dispositif de branchement caractérisé en ce que le chauffage supplémentaire (12) ainsi que la circulation du fluide chauffant (8) du dispositif de chauffage sont branchés cycliquement et que la durée de branchement du chauffage supplémentaire est modifiée par rapport à celle de la circulation du fluide chauffant en fonction d'autres grandeurs d'influence.

2.- Dispositif de branchement selon la revendication 1, caractérisé en ce qu'il est tenu compte de la température et/ou de l'humidité sur la structure portant le chauffage supplémentaire (12).

3.- Dispositif de branchement selon la revendication 1 ou 2, caractérisé en ce que le chauffage supplémentaire (12) est enclenché après plusieurs cycles de branchement de la circulation de fluide chauffant (8).

4.- Dispositif de branchement selon une des revendications 1 à 3, caractérisé en ce que la fréquence d'enclenchement du chauffage supplémentaire (12) est démultipliée par rapport à celle de la circulation du fluide chauffant (8).